# EUROPÄISCHE PATENTSCHRIFT

(11) **EP 2 227 447 B1**
(45) Veröffentlichungstag und Bekanntmachung des Hinweises auf die Patenterteilung: **01.04.2015**
(21) Anmeldenummer: 08865303.5
(22) Anmeldetag: 13.11.2008
(51) Int. Cl.: C04B 35/46, C04B 38/00, F26B 5/06, B01J 21/06, B01J 37/00

(54) **VERFAHREN ZUR TROCKNUNG VON KERAMISCHEN WABENKÖRPERN**
PROCESS FOR DRYING CERAMIC HONEYCOMB BODIES
PROCÉDÉ POUR SÉCHER DES CORPS CÉRAMIQUES EN NID D'ABEILLES

(30) Priorität: 20.12.2007 DE 102007061776
(43) Veröffentlichungstag der Anmeldung: 15.09.2010
(73) Patentinhaber: Johnson Matthey Catalysts (Germany) GmbH, 96257 Redwitz (DE)
(72) Erfinder: DOTZEL, Ralf, 90489 Nürnberg (DE); MÜNCH, Jörg, 96215 Lichtenfels (DE)
(74) Vertreter: Nunn, Andrew Dominic
(86) Internationale Anmeldenummer: PCT/EP2008/009567
(87) Internationale Veröffentlichungsnummer: WO 2009/080155

(56) Entgegenhaltungen:
- EP-A- 1 441 191
- DE-A1- 3 738 992
- DE-A1- 19 741 065
- JP-A- 2005 305 417
- US-A- 5 914 294

## Beschreibung

Die Erfindung bezieht sich auf ein Verfahren zur Trocknung eines keramischen Wabenkörpers.

Zur Abgasreinigung werden sowohl in Kraftwerksfeuerungen als auch in der Fahrzeugtechnik häufig Katalysatoren zur selektiven Reduktion von Stickoxiden eingesetzt. Diese sogenannten SCR-Katalysatoren umfassen in der Regel einen mit einer Vielzahl von Kanälen durchzogenen Wabenkörper. Es werden hierbei zum einen SCR-Katalysatoren eingesetzt, deren Wabenkörper vollständig aus einem porösen, katalytisch aktiven Material gebildet ist. Bei anderen SCR-Katalysatoren ist der Wabenkörper selbst aus einem nicht-katalytisch aktiven Material, trägt aber eine katalytische Beschichtung. In beiden Fällen wird der Wabenkörper üblicherweise durch Extrusion einer feuchten keramischen Masse hergestellt. Der solchermaßen vorgefertigte Wabenkörper wird anschließend getrocknet.

Ähnliche Wabenkörper werden auch für Partikelfilter eingesetzt.

Bei der Trocknung verliert das keramische Material des Wabenkörpers an Volumen, was im Folgenden als Schwindung bezeichnet wird. Die Schwindung führt insbesondere bei ungleichmäßiger Trocknung zu Materialspannungen. Um die Bildung von Spannungsrissen und damit Ausschuss zu vermeiden, muss auf eine möglichst homogene Trocknung und damit gleichmäßige Schwindung des Wabenkörpers geachtet werden.

In einem herkömmlichen Verfahren wird versucht, eine homogene Trocknung zu erreichen, indem der noch feuchte Wabenkörper in einen Karton verpackt wird. Der verpackte Wabenkörper wird anschließend in eine Trocknungskammer eingebracht. Der Karton schützt den Wabenkörper vor äußerer Konvektion, d.h. vor einer Luftbewegung, die eine ungleichmäßige Trocknung des Wabenkörpers begünstigen würde. Mangels Luftbewegung muss innerhalb des Kartons die Feuchtigkeit im Wesentlichen durch bloße Diffusion abtransportiert werden. Durch die langen Katalysatorkanäle im Inneren des Wabenkörpers entstehen hierbei lange Diffusionswege, die einer effektiven Trocknung entgegenwirken. Hierdurch trägt die innere Oberfläche des Katalysators, d.h. die Oberfläche der Katalysatorkanäle nur in geringem Maße zur Trocknung des Wabenkörpers bei. Vielmehr wird bei diesem Verfahren die Feuchtigkeit weitestgehend über die äußere Mantelfläche des Wabenkörpers an die umgebende Luft im Karton abgegeben und von dort an die Luft in der Trocknungskammer übertragen. Dies führt zu einer sehr langen Trocknungszeit im Bereich von mehreren Wochen.

Problematisch ist außerdem, dass die Schwindung bei herkömmlicher Trocknung vergleichsweise groß ist. Zum einen hat dies zur Folge, dass die Porosität des Wabenkörpers reduziert und damit die katalytischen Eigenschaften des Katalysators beeinträchtigt werden können. Zum anderen besteht durch die Schwindung des Wabenkörpers selbst bei gleichmäßiger Trocknung noch ein vergleichsweise hohes Risiko einer Rissbildung. Zudem bedeutet das Ver- und Entpacken der Wabenkörper in Kartons einen erheblichen Betriebsaufwand.

JP 2005-305417 offenbart ein Verfahren zur Herstellung eines katalytischen Wandflussfilters, umfassend die Schritte des Imprägnierens des Filters mit einer Lösung, welche eine Katalysatorkomponente enthaelt, das Trocknen oder Gefriertrocknen des imprägnierten Filters durch Bestrahlung mit elektromagnetischen Wellen von 0,3 bis 30 GHz und anschliessender thermischer Behandlung des imprägnierten getrockneten Produkts bei einer Temperatur von 300 bis 400°C.

US Patent Nr. 5914294 offenbart einen adsorptionsfaehigen Wabenmonolith zum Entfernen von flüchtigen organischen Verbindungen und anderen Chemikalien, wie zum Beispiel Ozon aus Fluidströmen. Der Monolith wird durch Extrudieren einer Mischung aus Aktivkohle, einem keramischen Material, eines Flußmittels und Wasser hergestellt. Anschließend folgt das Trocknen des extrudierten Monolithen und Brennen des getrockneten Monolith bei einer Temperatur und für einen ausreichenden Zeitraum, bei der das keramische Material miteinander reagieren kann eine keramische Matrix aubbildet. Der Monolith kann durch Vakuumtrocknung, Gefriertrocknung oder kontrolle der umgebenden Luftfeuchtigkeit getrocknet werden.

DE3738992 beschreibt ein Verfahren, dadurch gekennzeichnet, dass Stueck-und/oder Schuettgut oder Loesungen in einem vakuumdichten, abgeschlossenen Behaelter bei vermindertem Systemdruck elektromagnetischer Strahlung von Frequenyen aus dem Bereich 50 bis 7.5*10¹⁴ Hz ausgesetzt werden, wobei der entstehende Dampf an in unmittelbarer Naehe zum Gut gelegenen gekuehlten Flaechen innerhalb des Vakuumbehaelters kondensiert und das Kondensat abgefuehrt wird.

Das Verfahren ermoeglicht das Trocknen temperaturempfindlicher, fein disperser oder koloidaler Stoffe der pharmazeutischen, chemischen und keramischen Industrie, aber auch der in der Lebensmittelindustrie zu trocknenden Gueter.

Der Erfindung liegt die Aufgabe zugrunde, ein schonendes und gleichzeitig rationelles Trocknungsverfahren für einen keramischen Wabenkörper anzugeben.

Diese Aufgabe wird erfindungsgemäß gelöst durch die Merkmale des Anspruchs 1. Bei dem angegebenen Trocknungsverfahren wird der in einem feuchten Vorfertigungszustand - beispielsweise nach dem Extrudieren - vorliegende Wabenkörper eingefroren und die Feuchtigkeit - d.h. das zu entfernende Wasser - unter Unterdruck aus dem gefrorenen Wabenkörper entfernt.

Das erfindungsgemäße Verfahren weist eine Reihe von Vorteilen auf.

So ist das Verfahren mit einfachen Mitteln und vergleichsweise wenig Arbeitsaufwand durchzuführen. Insbesondere kann auf weitere Betriebsmittel wie beispielsweise Kartons verzichtet werden.

Da der zu trocknende Wabenkörper sich während des Trocknungsvorgangs im gefrorenen Zustand befindet, wird eine im Vergleich zu dem feuchten Vorfertigungszustand höhere Festigkeit und Stabilität des Wabenkörpers erreicht. Der Wabenkörper kann so während des Trocknungsvorgangs größere Spannungen aufnehmen als im feuchten Zustand.

Zudem hat sich gezeigt, dass durch die Trocknung des Katalysatorköpers in gefrorenem Zustand eine besonders geringe Schwindung erzielt wird. Dies führt zum einen zu einem geringeren Risiko einer Spannungsrissbildung und damit zu einer höheren Ausbeute bei der Herstellung. Zum anderen bewirkt die geringere Schwindung eine höhere Porosität des getrockneten Wabenkörpers bei einer geänderten Porenradienverteilung, was sich positiv auf seine katalytischen Eigenschaften auswirkt. Dieser Vorteil kommt besonders nach einer durch hohe Temperaturen im Betrieb des Katalysators hervorgerufenen Alterung zum Tragen, da die altersbedingte Verringerung der spezifischen Oberfläche des Katalysators wegen der von Haus aus höheren Porosität des erfindungsgemäß hergestellten Wabenkörpers eine geringere Rolle spielt.

Da im gefrorenen Zustand die Feuchtigkeit durch Sublimation direkt von der festen Phase in die Gasphase überführt wird, entstehen im Wabenkörper keine Feuchtegradienten und damit keine Bereiche, welche mit unterschiedlicher Schwindung behaftet sind. Das Risiko einer Spannungsrissbildung wird hierdurch weiter reduziert.

Das während des Trocknungsvorgangs an dem Wabenkörper anliegende Vakuum wirkt ferner am Mantel des Wabenkörpers in gleicher Weise wie innerhalb der Katalysatorkanäle. Die Feuchtigkeit wird daher nicht mehr hauptsächlich über den Mantel des Wabenkörpers abtransportiert, sondern auch über die Innenwände des Wabenkörpers, wodurch die Übertragungsfläche vergrößert wird. Hierdurch wird im Vergleich zu Trocknungsverfahren, die maßgeblich auf Feuchtigkeitsdiffusion beruhen, eine wesentlich verkürzte Trocknungszeit erreicht. Auch die hohe Porosität des Wabenkörpers wirkt sich hierbei positiv aus. Wandert nämlich die Sublimationsgrenze während des Trocknungsvorgangs in den Wabenkörper hinein, so erfolgt die Sublimation in zunehmendem Maß über die Porenoberfläche, welche um ein Vielfaches größer ist als die geometrische (innere und äußere) Oberfläche des Wabenkörpers. Dadurch wird die Trocknungszeit noch weiter verkürzt.

Erfindungsgemäß, erfolgt das Einfrieren des Wabenkörpers durch das Anlegen des Unterdrucks. Der Unterdruck wird derart angelegt, dass die Feuchtigkeit des Wabenkörpers teilweise verdampft, so dass die nach dem Joule-Thomson-Effekt resultierende Abkühlung zum Einfrieren des Wabenkörpers führt. Dadurch kann die ansonsten zur Kühlung des Wabenkörpers erforderliche externe Kühlenergie ganz oder zumindest teilweise eingespart werden. Gegebenenfalls kann sogar ein eigenes Kühlaggregat entfallen, wodurch das Verfahren preiswert durchführbar und insbesondere auch energetisch besonders günstig wird.

In bevorzugter Ausführung wird als Wabenkörper ein Vollextrudat aus einem katalytisch aktiven Material herangezogen. Das vorstehend beschriebene Verfahren ist insbesondere gut auf einen Wabenkörper anwendbar, der im Wesentlichen aus Titanoxid besteht.

Der Atmosphärendruck in der Trocknungskammer wird bevorzugt schlagartig reduziert. Dadurch wird der zu trocknende Wabenkörper schockgefroren. Dies hat zur Folge, dass die Vorteile des Verfahrens, die sich durch den gefrorenen Zustand des Wabenkörpers ergeben, wie beispielsweise die höhere Stabilität und die kleine Schwindung des Wabenkörpers, in besonderem Maße zum Tragen kommen. Als schlagartig wird insbesondere eine Unterdruckanlegung bezeichnet, bei der der Atmosphärendruck in der Trocknungskammer innerhalb einer Zeitspanne von ca. 5 min bis ca. 30 min, insbesondere innerhalb von ca. 10 min von Raumdruck (ca. 1000 mbar) auf einen Enddruck von unter 6 mbar, insbesondere auf unter 4 mbar abgesenkt wird.

Gemäß der Erfindung, wird während der Trocknung des Wabenkörpers der Unterdruck bei weniger als 6 mbar im Wesentlichen konstant gehalten. Hierbei liegen günstige äußere Bedingungen hinsichtlich der gewünschten Sublimation des Eises, d.h. dem direkten Übergang aus der Fest- in die Gasphase, vor. Ein annähernd konstanter Unterdruck von etwa 4 mbar hat sich hierbei in zahlreichen Versuchen als bevorzugt herausgestellt.

Durch zahlreiche Versuche hat sich herausgestellt, dass es bei Verwendung von Infrarotstrahlung zu einer gewünschten, beschleunigten Sublimation des Eises kommt. Solange der Wabenkörper noch Wasser enthält und sich im Unterdruck befindet, ändert sich die Temperatur des Trockenguts nicht. Die Temperatur ist entsprechend des Dampfdruckdiagramms für Wasser an den Druck gekoppelt. Sobald jedoch alles Eis oder Wasser aus dem Wabenkörper entfernt ist, steigt die Temperatur der Wabe an. Wegen der schlechten Wärmeleitfähigkeit einer Keramik erfolgt zudem die Sublimation bzw. Trocknung im Inneren des Wabenkörpers deutlich langsamer als an einer angestrahlten Wabenseite. Somit ergeben sich relativ hohe Temperaturgradienten über den Wabenquerschnitt (innen gefroren - außen heiß). Da der Wabenkörper nicht ohne Gefahr heiß aus der Trocknung entnommen werden kann, sollte zweckmäßigerweise nach dem Trocknungsvorgang unter Strahlungsbeheizung mittels Infrarot ein Kühlschritt angeschlossen werden. Mittels dieses zusätzlichen Kühlschritts wird der Wabenkörper vor Entnahme auf Raumtemperatur abgekühlt.

Somit kann die Trocknung des Wabenkörpers unter Unterdruck durch zusätzliche Bestrahlung mittels Infrarot deutlich beschleunigt werden, jedoch muss zweckmäßigerweise ein zusätzlicher Verfahrensschritt vor Entnahme erfolgen. Aufgrund der sich naturgemäß einstellenden Trocknung des Wabenkörpers von außen nach innen weist der Kern des Wabenkörpers zudem immer eine höhere Feuchte auf als der Außenbereich. Eine ausreichende Trocknung des Zentrums des Wabenkörpers führt somit immer zu einer vollständigen Trocknung der Außenbereiche.

Die geschilderten Nachteile können im Zuge der Erfindung zur Beschleunigung der Trocknung des Wabenkörpers durchaus toleriert werden. Gemäß der Erfindung, werden jedoch die genannten Nachteile hinsichtlich des Einsatzes einer Infrarotstrahlung zur Aufheizung des Wabenkörpers während der Trocknung unter Unterdruck aber dadurch vermieden, dass der Wabenkörper während des Trocknungsvorgangs mittels elektromagnetischer Strahlung im Lang,- Kurz-, oder Mikrowellenbereich bestrahlt wird. Der Mikrowellenbereich umfasst hierbei Frequenzen zwischen 300 MHz und 300 GHz. Der Kurzwellen- oder HF-Bereich schließt sich niederfrequent dem Mikrowellenbereich an und umfasst hierbei Strahlung bis hinab zu einer Frequenz von 3 MHz. Der Langwellenbereich umfasst insbesondere elektromagnetische Strahlung mit einer Frequenz zwischen 30 und 300 kHz. Vorteilhafterweise wird Strahlung im Kurzwellenbereich und insbesondere im Mlkrowellenbereich eingesetzt. Der Energieeintrag durch die elektromagnetische Strahlung erfolgt annähernd konstant über das gesamte Wabenvolumen, so dass es nicht zu einer Ausbildung von Temperaturgradienten über den Wabenkörper kommt. Die eingestrahlte Energie wird unmittelbar für die Sublimation des Eises und nicht zur Aufheizung der Wabe verwendet. Der Wabenkörper bleibt insofern kühl.

Da die Trocknung mittels der elektromagnetischen Strahlung im angegebenen Frequenzbereich gleichmäßig im gesamten Wabenkörper abläuft, ist im Gegensatz zu einer Beheizung mittels Infrarotstrahlern ein gewünschter Trocknungsgrad für den Wabenkörper einstellbar. Zweckmäßigerweise wird hierzu die Dauer und/oder die Energie der Einstrahlung entsprechend dem gewünschten Trocknungsgrad gesteuert. Der Wabenkörper wird insbesondere mit einer gewissen Restfeuchte dem Trocknungsvorgang entnommen.

Bevorzugt erfolgt die Trocknung unter Einstrahlung der elektromagnetischen Strahlung im Lang-, Kurz- und Mikrowellenbereich kontinuierlich in einem Durchlaufverfahren. Dabei werden die Wabenkörper kontinuierlich nach einem Fließbandprinzip dem Trocknungsvorgang unter Einsatz der elektromagnetischen Strahlung unterzogen. In einer weiter vorteilhaften Ausgestaltung wird die kontinuierliche Trocknung mittels eines Bandtrockners realisiert. Dabei werden die Wabenkörper zur Trocknung und zur Einstrahlung kontinuierlich in den Bandtrockner eingefahren und verlassen diesen nach Durcheilen der Trocknungsstrecke. Ein Bandtrockner bietet zudem den großen Vorteil, dass jeder einzelne der Wabenkörper durch unterschiedliche Zonen des eingestrahlten elektromagnetischen Feldes bewegt wird, so dass für jeden Wabenkörper ein annähernd homogener Strahlungseintrag gewährleistet ist. Um die Auswirkungen der Inhomogenität des eingestrahlten Feldes hinsichtlich des Trocknungsergebnisses weiter zu verringern, empfiehlt es sich, den Wabenkörper während des Durchlaufens des Trocknungsvorgangs bzw. während der Einstrahlung zusätzlich zu drehen. Die natürliche Inhomogenität eines beispielsweise nach dem Stand der Technik erzeugten Mikrowellenfeldes hat insofern keinen nennenswerten Einfluss mehr auf das Trocknungsergebnis.

Im Folgenden werden Ausführungsbeispiele der Erfindung näher erläutert.

### Vergleichsbeispiel 1:

Zunächst wird durch Extrusion eines feuchten Katalysator-Materials, das aus Titanoxid mit ca. 20% Beimischungen besteht, ein Wabenkörper für einen SCR-Katalysator hergestellt. Der Wabenkörper hat z.B. einen Durchmesser von ca. 150 mm, eine Länge von ca. 100 mm und eine durchschnittliche Wandstärke von ca. 0,3 mm. Nach dem Extrusionsvorgang liegt der Wabenkörper in einem feuchten Vorfertigungszustand vor.

Der derart vorgefertigte Wabenkörper wird in eine evakuierbare Trocknungskammer eingebracht. Innerhalb von etwa 10 Minuten wird der Atmosphärendruck in der Trocknungskammer von Raumdruck auf einen Enddruck von circa 4 mbar reduziert, wobei der Wabenkörper unter teilweiser Verdampfung der in ihm gespeicherten Feuchtigkeit einfriert. Der Wabenkörper wird nun bei dem genannten Enddruck während einer Trocknungszeit von etwa 10 Stunden und einer Temperatur von 60 °C getrocknet, wobei während dieser Trocknungszeit die zu entfernende Feuchtigkeit sublimiert. Die entzogene Feuchtigkeit wird in einer an die Trocknungskammer angrenzenden Kondensationskammer ausgefroren.

### Beispiel 2:

Ein Wabenkörper der vorbeschriebenen Zusammensetzung mit einem Durchmesser von 250 mm, einer Länge von ca. 200 mm und einer durchschnittlichen Wandstärke von ca. 0,3 mm wird entsprechend Beispiel 1 eingefroren und bei einem Unterdruck von etwa 4 mbar getrocknet. Zur Trocknung durchläuft der Wabenkörper einen Bandtrockner, in dem entlang der Trocknungsstrecke ein Mikrowellenfeld mit einer Leistung von 650 Watt generiert ist. Durch den volumetrischen Wärmeeintrag infolge der Mikrowellen wird eine Trocknungszeit von lediglich 3,5 Stunden erzielt. Bei entsprechend höheren Leistungen können sogar Trocknungszeiten bis unterhalb einer Stunde erreicht werden.

## Patentansprüche

1. Verfahren zur Trocknung eines porösen keramischen Wabenkörpers für einen Katalysator oder einen Partikelfilter das entsprechend einer gewünschten gleichmäßigen Restfeuchte des Wabenkörpers gesteuert wird, bei dem der in einem feuchten Vorfertigungszustand vorliegende Wabenkörper eingefroren wird, durch Anlegen eines im Wesentlichen konstanten Vakuums kleiner 6mbar, bei dem Feuchtigkeit durch das Vakuum durch Sublimation aus dem gefrorenen Wabenkörper entfernt wird, und bei dem der Wabenkörper mit elektromagnetischer Strahlung im Lang-, Kurz-, oder Mikrowellenbereich während des Trocknungsvorgangs bestrahlt wird, um die Sublimation des Eises zu beschleunigen und nicht um die Wabe aufzuheizen und bei dem der Energieeintrag durch die elektromagnetische Strahlung annähernd konstant über das gesamte Wabenvolumen erfolgt, so dass sich die Temperatur des Wabenkörpers nicht ändert.

2. Verfahren nach Anspruch 1,
**dadurch gekennzeichnet**,
dass der Mikrowellenbereich Frequenzen zwischen 300 MHz und 300 GHz umfasst..

3. Verfahren nach Anspruch 1 oder 2,
**dadurch gekennzeichnet**,
dass der Atmosphärendruck in der Trocknungskammer innerhalb von 5 bis 30 Minuten auf unterhalb von 6 mbar reduziert wird.

4. Verfahren nach einem der Ansprüche 1 bis 3,
**dadurch gekennzeichnet**,
dass als Wabenkörper ein Vollextrudat aus einem katalytisch wirkenden Material herangezogen wird.

5. Verfahren nach Anspruch 4,
**dadurch gekennzeichnet**,
dass das katalytisch wirkende Material im Wesentlichen aus Titanoxid besteht.

6. Verfahren nach einem der vorhergehenden Ansprüche,
**dadurch gekennzeichnet**,
dass die Trocknung unter der elektromagnetischen Strahlung kontinuierlich in einem Durchlaufverfahren erfolgt.

7. Verfahren nach Anspruch 6,
**dadurch gekennzeichnet**,
dass die kontinuierliche Trocknung des Wabenkörpers während des Durchlaufens eines Bandtrockners erfolgt.

8. Verfahren nach Anspruch 6 oder 7,
**dadurch gekennzeichnet**,
dass der Wabenkörper während des Durchlaufs zusätzlich gedreht wird.

## Claims

1. A method for drying a porous ceramic honeycomb structure for a catalyst or a particulate filter which is controlled in accordance with a desired uniform residual moisture content of the honeycomb structure, in which the honeycomb structure is frozen in a moist prefabricated state by applying a substantially constant vacuum of below 6 mbar, in which the moisture is removed from the frozen honeycomb structure by the vacuum by sublimation, and in which the honeycomb structure is irradiated with electromagnetic radiation in the long-, short-, or microwave range during the drying process in order to accelerate sublimation of the ice and not in order to heat the honeycomb and in which the energy input by the electromagnetic radiation is approximately constant over the entire volume of the honeycomb, such that the temperature of the honeycomb structure does not change.

2. A method according to claim 1,
**characterised in that**
the microwave range includes frequencies between 300 MHz and 300 GHz.

3. A method according to claim 1 or claim 2,
**characterised in that**
the atmospheric pressure in the drying chamber is reduced to below 6 mbar within 5 to 30 minutes.

4. A method according to one of claims 1 to 3,
**characterised in that**
a solid extrudate of a material with a catalytic action is used as the honeycomb structure.

5. A method according to claim 4,
**characterised in that**
the material with a catalytic action substantially consists of titanium oxide.

6. A method according to one of the preceding claims,
**characterised in that**
drying with exposure to the electromagnetic radiation proceeds continuously in a continuous flow method.

7. A method according to claim 6,
**characterised in that**
continuous drying of the honeycomb structure proceeds during passage through a belt dryer.

8. A method according to claim 6 or claim 7,
**characterised in that**
the honeycomb structure is additionally rotated during passage.

## Revendications

1. Procédé de séchage d'un corps céramique poreux en nid d'abeilles pour un catalyseur ou un filtre à particules commandé en fonction d'une humidité résiduelle homogène souhaitée, dans lequel le corps en nid d'abeilles présent dans un état préfabriqué humide est congelé, par application d'un vide sensiblement constant inférieur à 6 mbar, dans lequel l'humidité est éliminée grâce au vide par sublimation du corps en nid d'abeilles congelé, et dans lequel le corps en nid d'abeilles est irradié avec un rayonnement électromagnétique dans la gamme des ondes longues, des ondes courtes ou des micro-ondes pendant l'opération de séchage, dans le but d'accélérer la sublimation de la glace et non pas de chauffer la structure en nid d'abeilles, et dans lequel l'apport d'énergie par ledit rayonnement électromagnétique s'effectue de manière quasiment constante sur tout le volume de la structure en nid d'abeilles, si bien que la température du corps en nid d'abeilles ne change pas.

2. Procédé selon la revendication 1,
**caractérisé en ce que**
la gamme des micro-ondes comprend des fréquences comprises entre 300 MHz et 300 GHz.

3. Procédé selon la revendication 1 ou 2,
**caractérisé en ce que**
la pression atmosphérique dans la chambre de séchage est réduite en moins de 5 à 30 minutes à moins de 6 mbar.

4. Procédé selon l'une des revendications 1 à 3,
**caractérisé en ce que**
on utilise comme corps en nid d'abeilles un produit d'extrusion complet réalisé en un matériau à effet catalytique.

5. Procédé selon la revendication 4,
**caractérisé en ce que**
le matériau à effet catalytique est essentiellement constitué d'oxyde de titane.

6. Procédé selon l'une des revendications précédentes,
**caractérisé en ce que** le séchage sous ledit rayonnement électromagnétique s'effectue en continu au défilé.

7. Procédé selon la revendication 6,
**caractérisé en ce que** le séchage continu du corps en nid d'abeilles s'effectue pendant le défilement dans un sécheur à bande.

8. Procédé selon la revendication 6 ou 7,
**caractérisé en ce que** le corps en nid d'abeilles subit en plus une rotation pendant le défilement.
